# EUROPEAN PATENT SPECIFICATION

(11) **EP 0 616 829 B1**
(45) Date of publication and mention of the grant of the patent: **31.05.2000**
(21) Application number: 94200698.2
(22) Date of filing: 21.03.1994
(51) Int. Cl.: B01D 33/15, B01D 29/01

(54) **Filter for liquids with solid particles in suspension, in particular lubricating and cooling fluid in machine tools**
Filter für Flüssigkeiten mit festen suspendierten Partikeln, insbesondere für Schmier- und Kühlflüssigkeit in Maschinenwerkzeugen
Filtre pour liquids avec des particules solides en suspension, en particulier pour fluid lubrifiant et réfrigérant dans des outils de machine

(30) Priority: 23.03.1993 IT MO930036; 23.03.1993 IT MO930037
(43) Date of publication of application: 28.09.1994
(73) Proprietor: TRASPORTATORI GOVONI S.R.L., 44042 Cento (IT)
(72) Inventor: Soavi, Fabio, Frazione di Reno (BOLOGNA) (IT)
(74) Representative: Luppi, Luigi

(56) References cited:
- EP-A- 0 488 698
- AT-B- 376 582
- DE-A- 2 613 429
- FR-A- 1 371 379
- US-A- 4 136 018

## Description

The invention concerns a filter for liquids with solid particles in suspension, in particular lubricating and cooling fluid in machine tools, including a filter element having gauged openings that permit the fluid to pass through and stop the particles to be filtered.

The prior art involves settling tanks in which the liquid taken from the machine tool is slowed to a velocity that allows the particles in suspension to settle by gravity on the bottom of the tank, the said tanks possibly having staggered opposing vertical deflector baffle plates that impart a sinusoidal motion to the liquid that favours the sedimentation of the particles.

The prior art also involves filtering devices for lubricating and refrigerating fluid consisting of channels in which the fluid is made to flow through evenly distributed through holes in a series of plates positioned transversely with respect to the direction of flow and which are extractable to enable them to be cleaned periodically; the gauged holes of each plate being essentially of a constant diameter which is smaller than that of the holes in the plate immediately upstream of it, so as to constitute a series progressively finer screening elements.

Furthermore, as regards the settling tanks, the strata of sludge made up of successive layers of deposited particles needs to be periodically removed from the bottom of the tank in order to prevent them from filling up with consequent clogging of the extractor pump and causing improper operation due also to the reduced flow section of the liquid; this causes a considerable increase in maintenance costs and time.

The devices with filtering plates placed transversely with respect to the direction of the flow also involve costly maintenance procedures to clean the plates, as well as requiring the installation of expensive instruments to measure the degree of clogging of the plates, which are often not entirely reliable due to the make up of the fluid to be treated, often not homogeneous and sometimes including chemically aggressive compounds.

The state of the art also involves filters in which the liquid to be filtered is subjected to external forces, such as centrifugal, magnetic or gravitational forces, that act selectively on the particles to be separated.

The centrifugal separators, the so-called hydrocyclones, are highly sensitive to the density of the fluid and to variations in the inlet and outlet pressures; furthermore, such filters involve highly complex installations with consequent high costs.

With magnetic filters, which are also sensitive to the density of the fluid and limited to the treatment of ferromagnetic cuttings, the flow velocity of the liquid needs very low, resulting in unacceptable dimensions, even for relatively low flow rates of liquid to be filtered.

Sedimentation filters are also large in size primarily because of the need for large flow sections of the fluid to be filtered, in order to cause a sufficient deceleration of the flow to enable the contaminating particle to settle out.

Such filters are highly expensive and their size means that they can only be positioned on the ground.

The state of the art also involves filters in which the contaminated fluid is forced through filtering plates, or membranes, or gauzes, by means of a difference in the pressures upstream and downstream of the plate that blocks particles that are larger than maximum dimension of the passage through the plate.

This type of filter, whilst being suitable for a wide range of flows, also with the use of a number of filtering elements arranged in parallel, having performances substantially independent of the density of the fluid and of the inlet pressure, is susceptible, with extended use, to clogging of the filtering element; this means that they require periodic cleaning, achieved by scraping the filtering element or inverting the flow direction: in both cases the filter has to be removed from its site.

It is known from FR-A-1371379, which is considered the closest prior art, a filter for liquid suspensions which includes a distributor element to which the liquid to be filtered is supplied in such a way as to be directed against a filter element having gauged openings. The filter element is rotated so that there is a relative velocity between the distributor element and the filter element. The liquid to be filtered is deposited by gravity on the surface of the filter element through an inlet tube that has a longitudinal axis parallel to the longitudinal axis of the rotation shaft of the filter element.

In a filter according to FR-A-1371379 the particles trapped by the filter are partially removed from the surface of the filter by utilising the centrifugal effect generated by the rotation of the filter. However this centrifugal effect is rapidly decreasing from the periphery toward the centre of the filter, which makes substantially impossible to obtain an automatic effective removal of the particles from the central portion of the filter. Therefore, periodic cleaning operations of the filter are necessary, which involve maintenance costs and time.

Such prior art may be subject to considerable improvements with a view to eliminating the said drawbacks.

From the foregoing emerges the need to resolve the technical problem of inventing a filter for liquids contaminated by solid particles in suspension that is self©cleaning, that is, a filter which enables an optimal degree of separation of the particles in suspension to be maintained with time, with a continuous removal of the residue filtered out; the filtering efficiency remaining very high even with considerable variations in pressure or flow rate of the fluid; all this with reduced costs and dimensions, with complete flexibility of installation in the recirculation circuit; the plant in which such a filter is installed enabling a drastic reduction in the required maintenance and control operations: all at reduced cost.

The invention resolves the said technical problem by adopting a filter of the first mentioned type, including a distributor element to which the fluid to be filtered is supplied in such a way to be directed against at least one filter element, said distributor element and said filter element having a relative velocity with a component parallel to a plane tangent to said filter element.

In a particularly advantageous version, the said at least one filter element having an essentially flat surface with active surface in the shape of an annular band mounted in a support made to rotate by driving means: the positioning of the plane containing the filter element being advantageously perpendicular to the axis of rotation.

In another version, the said distributor of the fluid to be filtered being made to rotate around a longitudinal axis, the said at least one filter element being rotationally fixed or even counter-rotating.

In a further version, the said filter element being drum or basket shaped is made to rotate on its longitudinal axis with internal distributor for the supply of fluid in a direction that has at least one radial centrifugal component.

In a further version, the fluid distributor having a rotating deflector element, for example, with a conical surface, whose axis of symmetry does not coincide with the axis of rotation, for the projection of a correspondingly conical jet onto a filter element with an essentially flat surface.

The advantages offered by the invention are: elimination of the clogging of the filter, even with prolonged periods of use, with consequent drastic reduction in machine stop-time; automatic removal of the filter residue; considerable reduction in maintenance; possibility of filtering particles that have dimensions that are smaller than the size of the openings in the gauze, by inclining the jet; high degree of flexibility of use as regards the physical-mechanical properties of the fluid, the type of material to be filtered and the morphology of the particles; high degree of filtering efficiency, with the possibility of a wide range of variation of the supply pressure and flow rate; possibility of positioning the filter in locations other than on the ground; simple construction and reduced cost; possibility of obtaining even a degree of filtration that is variable with time by simple alteration of the clearance between the edges of the vane of the screw and the filter element.

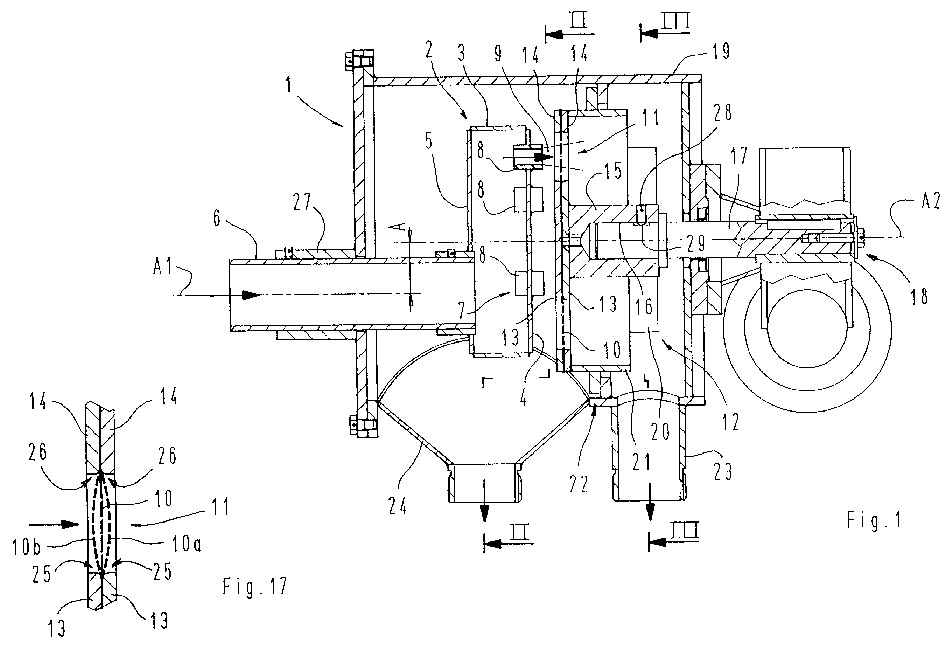

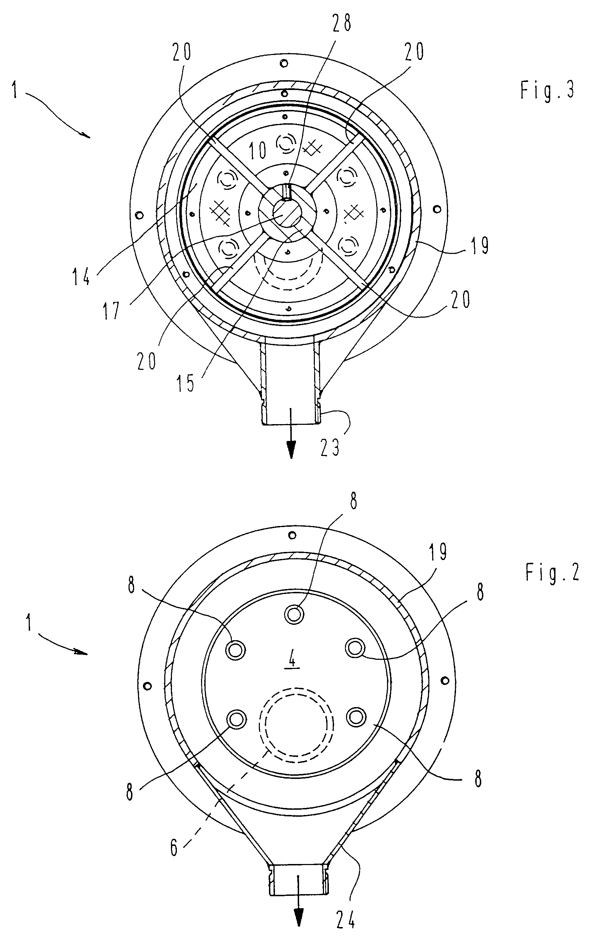

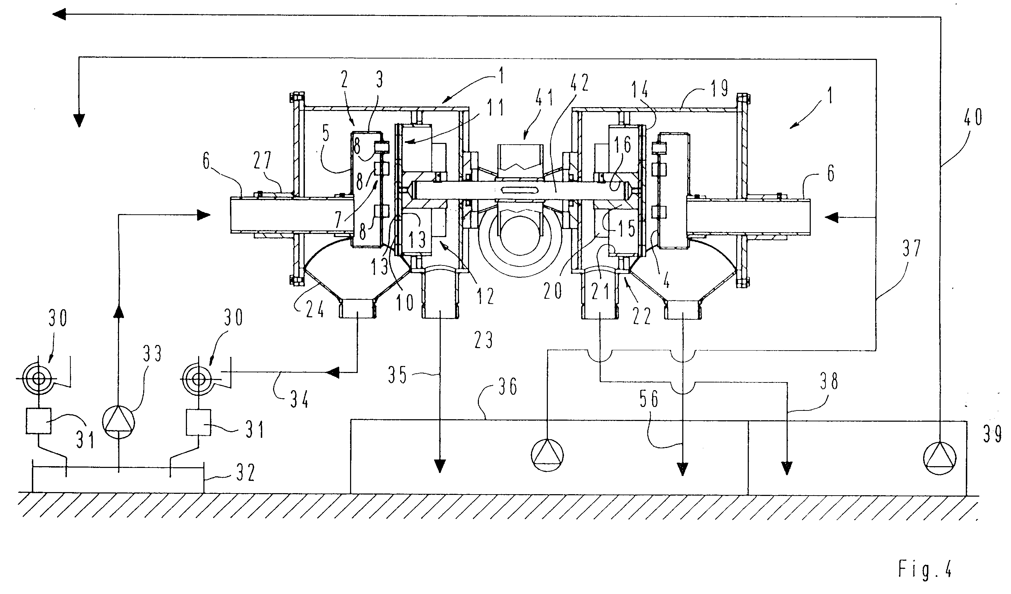

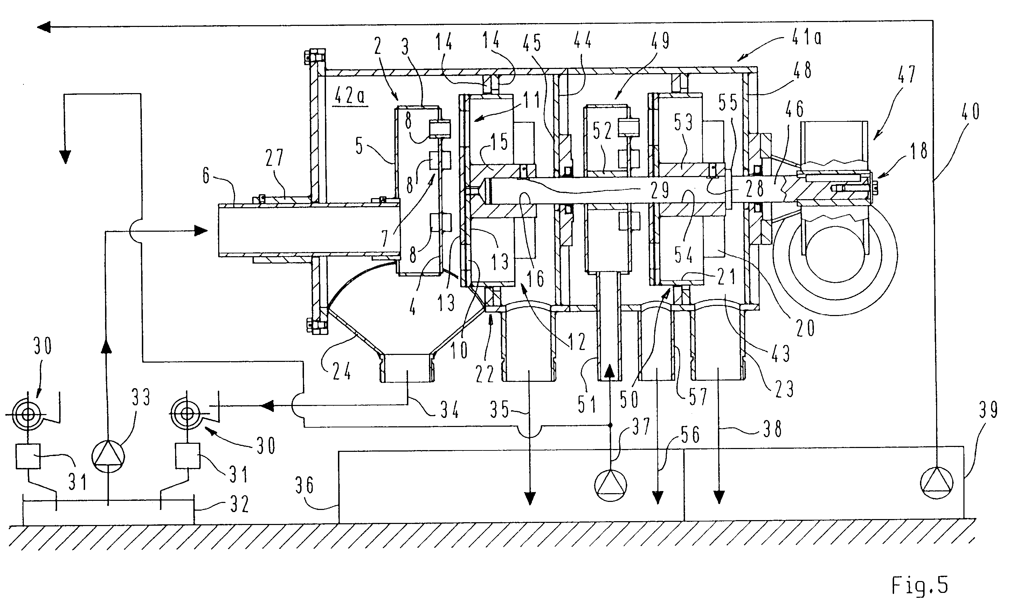

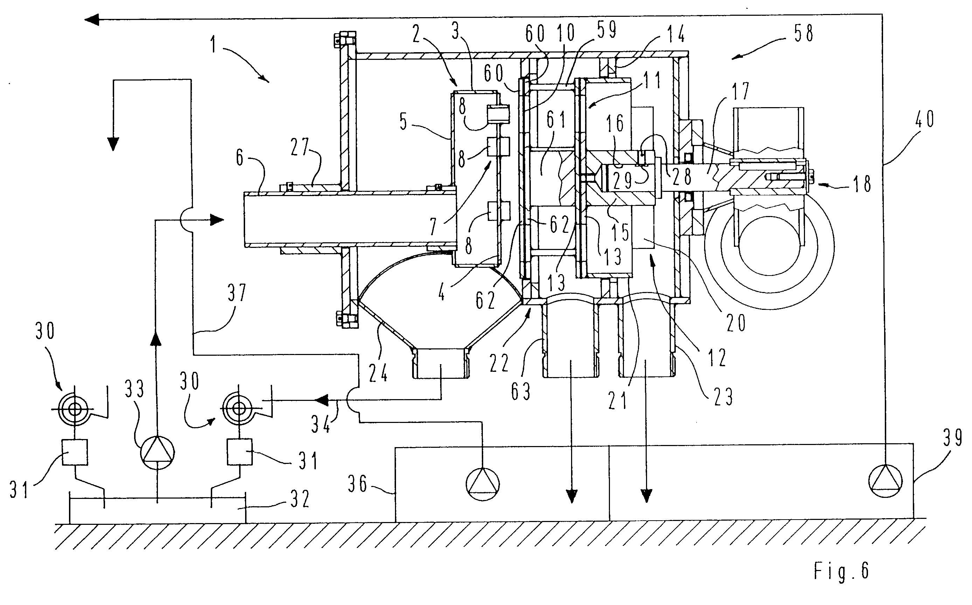

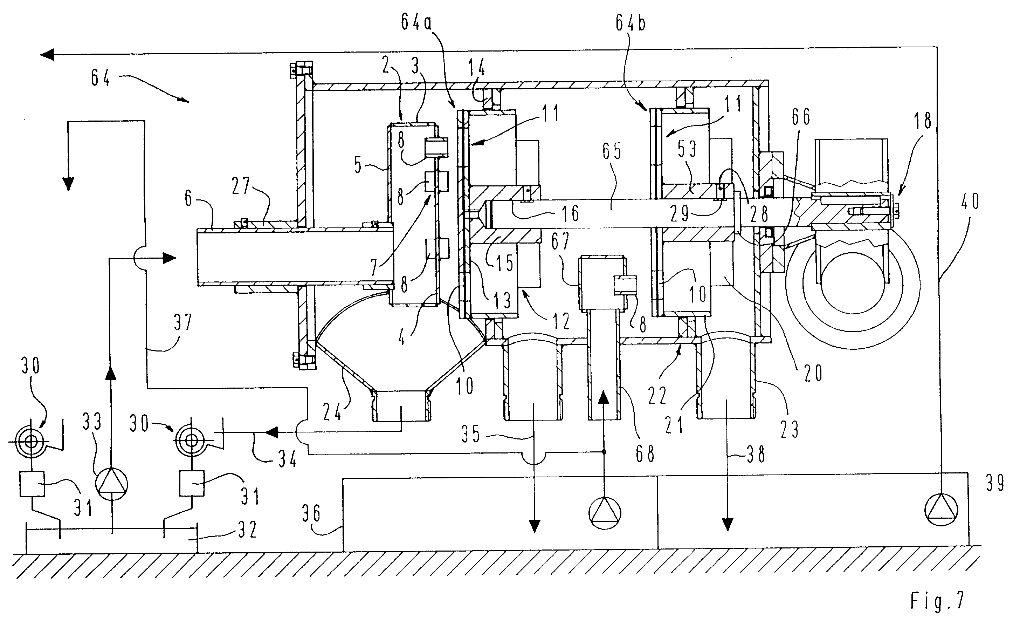

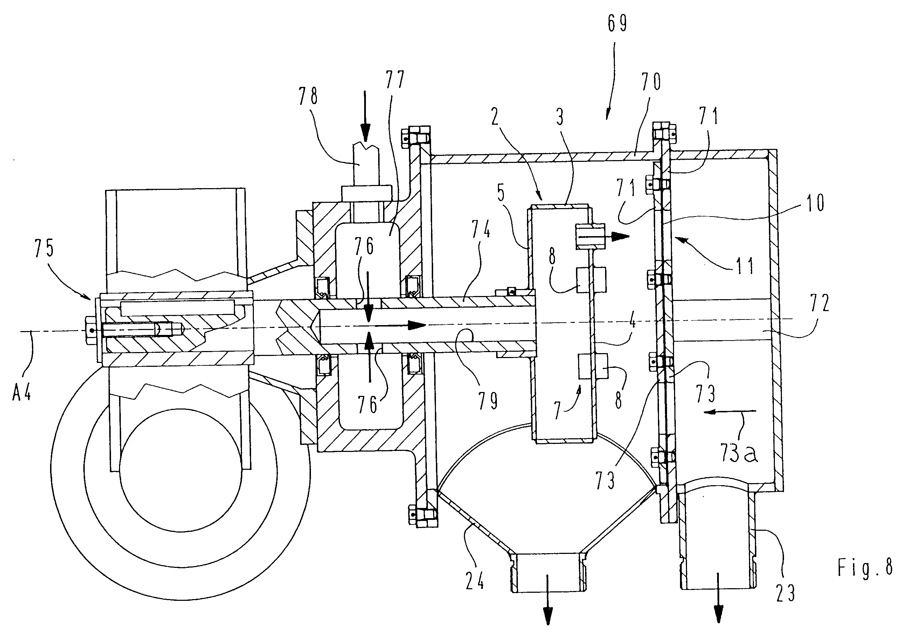

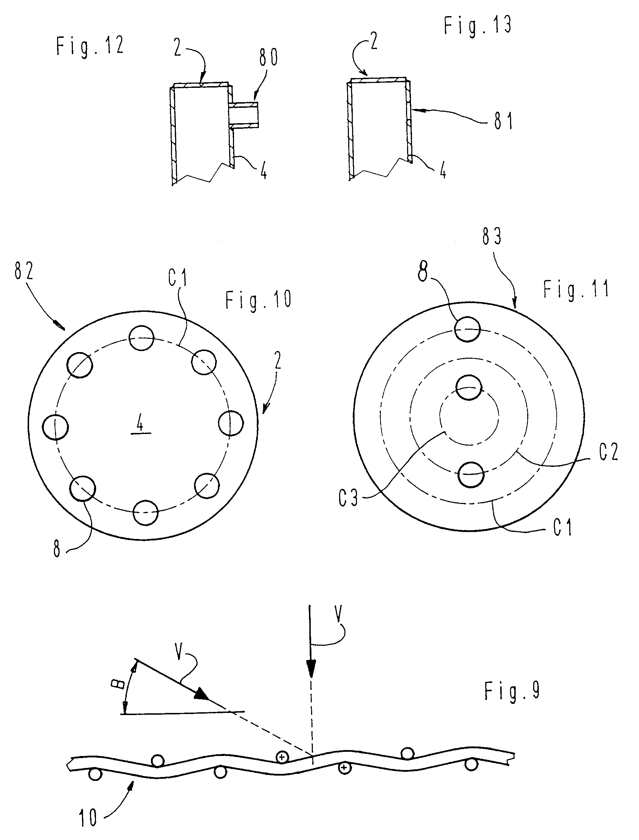

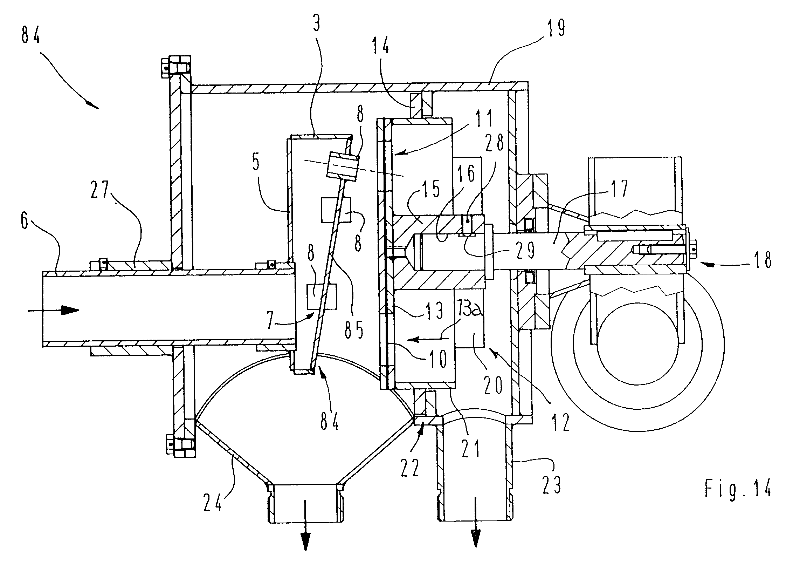

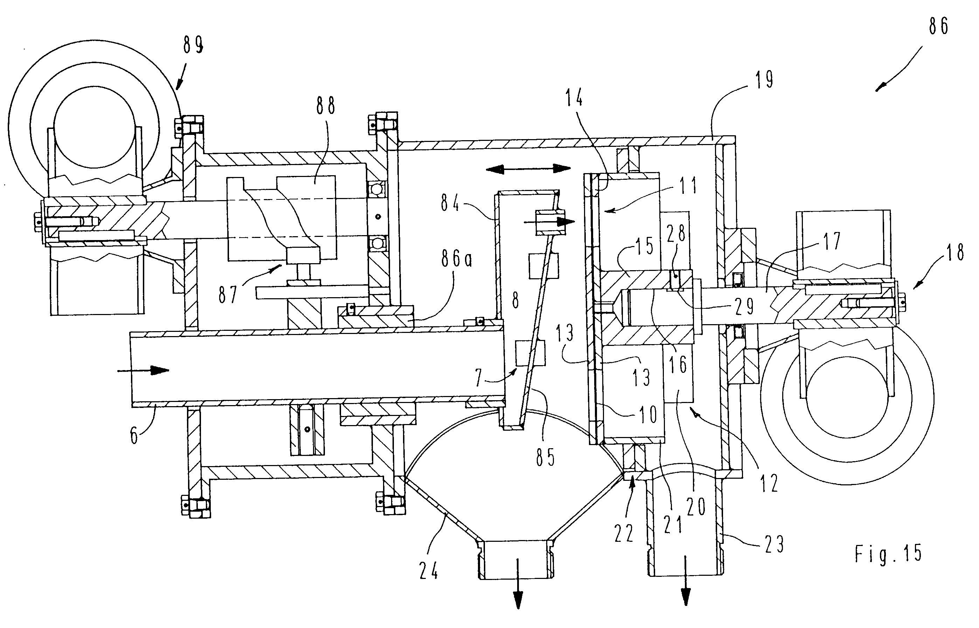

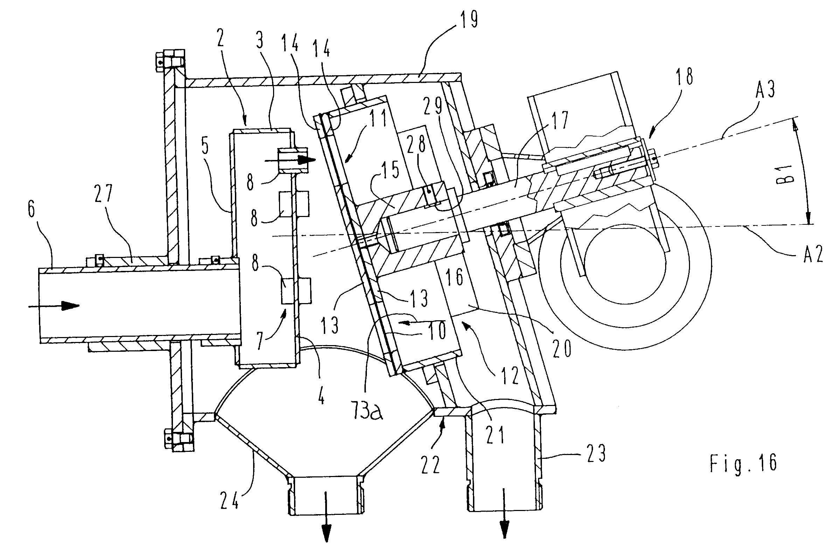

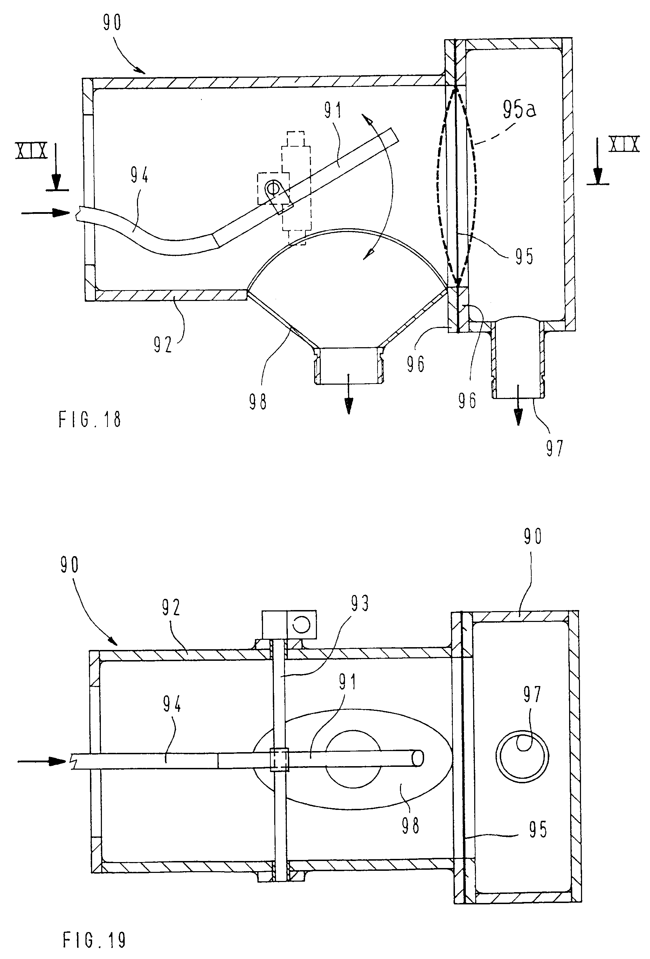

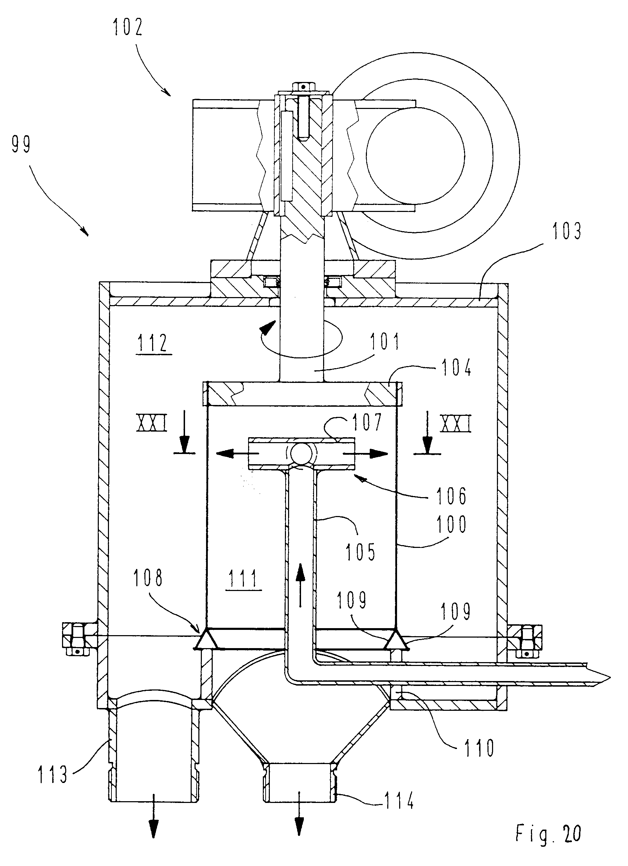

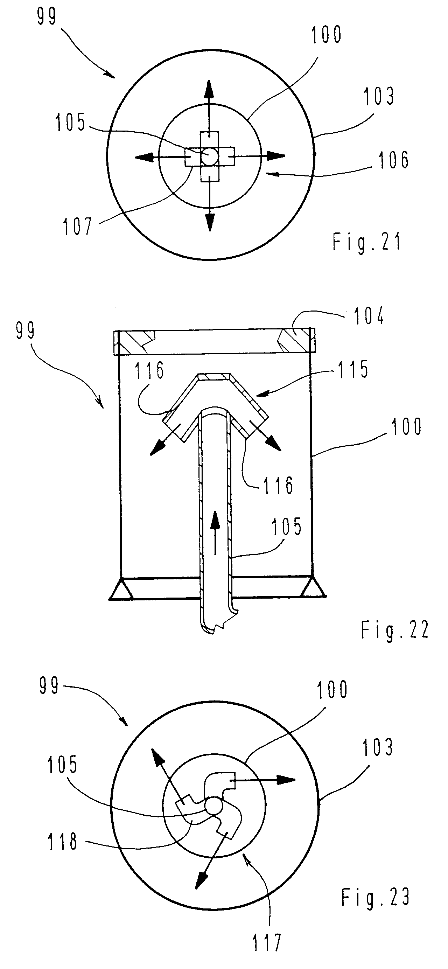

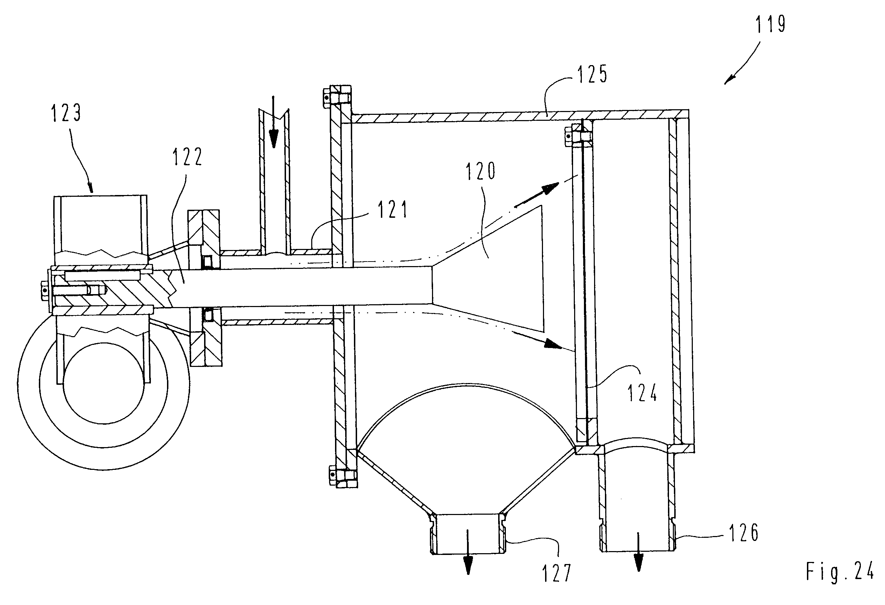

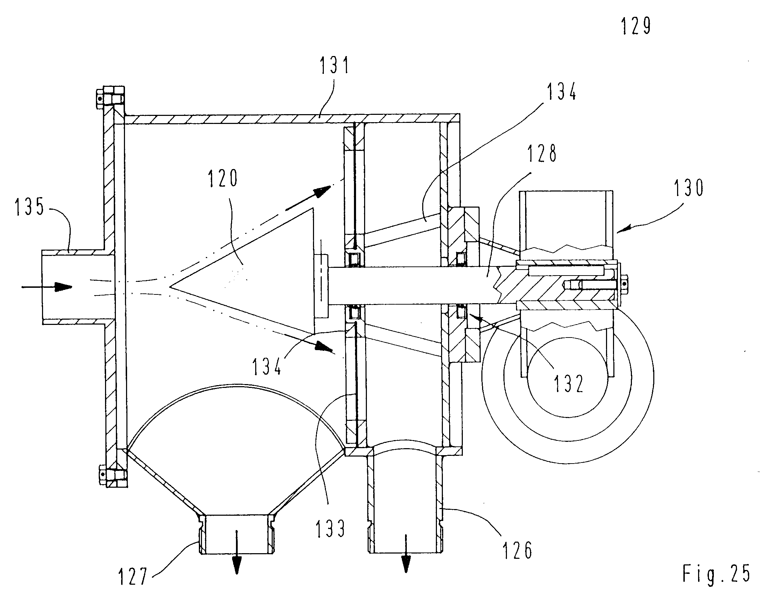

Some embodiments of the invention are illustrated, by way of example, in the sixteen tables of drawings attached, in which: Figure 1 is a longitudinal section of the first version of the invention as described, in the variation having a single rotating filter element; Figure 2 is the offset transverse section II-II of Figure 1; Figure 3 is the offset transverse section III-III of Figure 1; Figure 4 is a schematic view of two filters as in Figure 1 in series, positioned opposite each other, in a plant for reclaiming lubricating and cooling fluid in machine tools; Figure 5 is a longitudinal section of a filter as described as in Figure 1, in a first variation with two filtering groups in series driven by a single actuator; Figure 6 is a longitudinal section of a second variation of the first version of filter with a pair of consecutive filtering groups; Figure 7 is a longitudinal section of a third variation of the first version of filter with a pair of consecutive filtering groups analogous to those illustrated in Figure 6, but with supplementary flow of fluid; Figure 8 is a longitudinal section of a filter according to the invention, as in the said other version with rotating distributor and fixed filter element; Figure 9 is the transverse section, enlarged many times, of a gauze filter element, in a plane, for example, perpendicular to the warp; Figure 10 is a front view of a distributor, showing a distribution of the openings for the flow on a single circumference; Figure 11 is a view as in Figure 10 with the openings for the flow situated on circumferences of different diameters; Figure 12 is an enlarged, partial longitudinal section of a distributor aligned with the axis of the discharge nozzle; Figure 13 is a section as in Figure 12 but with a short-section nozzle; Figure 14 is a longitudinal section of the first version of filter, in a fourth variation having nozzles that are at different distances from the rotating filter element; Figure 15 is a longitudinal section as in Figure 14, in a fifth variation with the distributor having alternating motion with respect to the filter element disc; Figure 16 is a longitudinal section of the first version of filter in a sixth variation with axis of rotation of the filter element inclined with respect to the axis of the distributor, which is rotationally fixed; Figure 17 is a detail, enlarged and sectioned, of the assembly device of the filter element; Figure 18 is the longitudinal vertical section of a filter as described, relating to the said third version with oscillating distributor; Figure 19 is the section XIX-XIX of Figure 18; Figure 20 is the longitudinal section of a filter acording to the invention, as in the said further version with the drum, or basket shaped filter element; Figure 21 is the horizontal transverse section XXI-XXI of Figure 20, showing the radial outlet holes for the fluid, divided in two opposite pairs arranged in a cross; Figure 22 is a side view of a distributor placed inside a drum filter element, in the variation with non co-planar outlets pointing downwards and outwards; Figure 23 is a section as in Figure 21, but in the variation with three outlets arranged in such a way as to impart a tangential component of speed to the flow with respect to the filter element; Figure 24 is a longitudinal section of the said last version in the variation with a flow deflector supported on the same side of entry of the flow; Figure 25 is a section as in Figure 24, but in a second variation with the deflector rotationally supported on the opposite side of entry of the flow.

The Figures show: 1, the filter as described in the first variation of the first version consisting of distributor 2, preferably cylindrical in shape with lateral surface 3 axially delimited by front plate 4 and rear plate 5; 6, an axial tube for the supply of the fluid to be filtered afferent with rear plate 5, having axis A1 situated a distance A from axis A2 of the distributor 2, for example, as much as a few centimeters to induce a turbulent motion to the fluid as it enters the distributor to avoid accumulation of sediment or particles; 7, a number of nozzles 8, for example consisting of tubular elements supported at an intermediate section of their length, for example distributed at 120 DEG on the front plate 4 of distributor 2, having axes preferably positioned on the same ideal circumference to direct jets 9 of fluid in distributor 2 against filter element 10, essentially flat, having active surface 11 facing the said jets in the shape of an annular band, or even of a disc: the said filter element consisting of a gauze, or cloth, for example in stainless steel having a gauged mesh with openings of 25 micrometers or more.

The filter element, which can be fixed on its rear side to a support structure in the form of a lamina with ample holes for the passage of the filtered fluid, or a larger gauge mesh, or a suitably drilled metal sheet, can have a curved profile, concave, 10a (Figure 17), or convex, 10b, in relation to the jets 9. A rotating support 12 is connected to said disc filter element 10, 10a, 10b to fix its innermost portion between a pair of central flanges 13 and a pair of peripheral rings 14: the external diameter of the said pair of central flanges 13 and the internal diameter of the said pair of rings 14 defining the height of the active annular band 11 of the filter element 10; 15, a hub connected to the pair of flanges 13, having on its rear side an axial hole 16, for the insertion of shaft 17 of a motor reducer 18 fixed to the cover 19: the axis of the said shaft 17 being advantageously aligned with axis A2 of the said distributor 2; 20, a number of arms extending radially from rearmost part of the hub 15 to support the tubular sleeve 21 to the pair of rings 14: the length of the said sleeve being sufficient to prevent the radial arms 20 from obstructing the flow of the fluid through the filter element 10; 22, labyrinth seals between the external surface of the sleeve 21 and the internal surface of the casing 19 to prevent the direct passage of the contaminated fluid to the discharge 23 for the filtered fluid; 24, the discharge for the filtered residue, positioned in relation to the filter element 10, 10a, 10b and underneath it; 25, the facing edges of the pair of flanges 13, preferably rounded to prevent damaging the filter element 10 under the pressure of the jets 9; 26, the internal, facing edges of rings 14 similarly rounded; 27, an external coaxial sleeve coupling to fix the supply tube 6 to the frame; 28, a setscrew to fix hub 15 to shaft 17, locking into groove 29 in the shaft; 30 (Figure 4), a pair of cuttings conveyors for machine tools, not shown: the conveyors being as described in Italian patent 1.224.364 by the same applicant; 31, a pair of large gauge filters for the fluid, for example to remove particles with dimensions greater or equal to 2 mm, with outlet in a first reservoir 32 from which the liquid is removed by means of centrifugal pump 33 and pumped to inlet tube 6 of a first filter 1, having a filter element 10 with a gauze with a mesh of, say, 100 micrometers; 34, the recirculation tube of the filtration residue, connected to the discharge opening 24 of filter 1 for the recirculation upstream of filter 31, the filtered liquid being directed, by means of tube 35 to a second reservoir 36 for its subsequent use, by means of tubing 37, in part by the machine tool for high flow requirements such as, for example, washing the cabin, and in part to the inlet tube 6 of a second filter 1 in series with the first, having a gauze with a finer mesh, for example with a gauge of 25 micrometers; 38, the discharge tubing for the filtered fluid to send it to a third reservoir 39 from which it is pumped to the machine tool by means of tubing 40, for low flow requirements, such as, for example, the cooling of the piece being machined or for the lubrication of the tool; a single motor reducer unit being provided for the simultaneous actuation of the said first and second filter positioned opposite one another, by means of a single through shaft 42, whose extremities are inserted in the axial holes 16 of each hub 15; 41a, (Figure 5) a two-stage filter with a separate chamber for each stage, as in the first variation of the first version, consisting of a distributor 2 operating in unison with a corresponding disc filter element 10 with active surface in the form of an annular band 11 in a chamber 42a corresponding to the first filtering stage, the said chamber being delimited axially by chamber 43 corresponding to the second filtering stage by means of intermediate plate 44, having a central hole 45 to act as rotational support for shaft 46, connected to hub 15, actuated by motor reducing unit 47, fixed to end plate 48 which delimits the rear extremity of the said chamber 43; 49, a distributor for the fluid extracted from the first filtering stage so that it can be supplied to a second filter element 50 with finer mesh than the first one: distributor 49 in the second chamber 43 being analogous to distributor 2 but having essentially radial inlet tube 51, or even with a tangential component, and central tubular element 52 enclosing with clearance shaft 46.

The filter element 50 of the second filtering stage being analogous to that of the first filtering stage 10, 11, 14, 20, 21 but having hub 53 with axial through hole 54 for fixing said shaft 46 abutting against positioning ring 55 on the shaft; 56, a discharge tube for the filtered residue of the second filtering stage leading to tank 36, through the corresponding discharge opening 57; 58, (Figure 6) a filter with two filter elements in a single chamber, as in the second variation of the first version, consisting of a distributor 2 for the supply of fluid to be filtered to the two disc filter elements 10 axially consecutive, the second with a finer mesh than the first; 59, a tubular spacer element, peripherally open, extending axially from the outermost ring of the pair of rings 14 of the second filter element to support a pair of analogous rings 60 between which is fixed the peripheral part of the first filter element; 61, a cylindrical spacer element on the extension of the hub 15 towards the distributor 2 starting from the outermost flange 13 for supporting the central portion of the first filter element fixed between the pair of flanges 62 connected to it; 63, a discharge opening for the intermediate filtered residue, placed between the said openings 23, 24; 64, (Figure 7) a two-stage filter in a single chamber with supplementary flow between the two filter elements as in the third variation of the first version, the said filter consisting of a first filter element 64a with corresponding distributor, analogous to the one in Figure 1, supported at the extremity of a shaft 65 to which, in an intermediate portion along its length, there is a sleeve coupling 53 attached, drilled axially and abutting against a positioning ring 66 to support a second filter element 64b with finer mesh than the first; 67, a second distributor, for example with a cylindrical casing, positioned between the two said filter elements 64a, 64b to supply fluid extracted from the second reservoir 36 through nozzles 8: the circumferential positioning of the said second distributor in relation to the annular band of active surface being such that it does not interfere with the essentially axial trajectories of the jets of fluid from the first distributor; 68, a fluid supply tube, for example positioned vertically, for the second distributor 67; 69, (Figure 8) a filter, as in the second version of the invention, having a flat filter element 10 which is fixed, held in position relative to the housing 70 by being clamped between a pair of rings 71; 72, an axial support rod for the central portion of the said filter element, held between a pair of central flanges 73, one of which is connected to the said rod; 74, a hollow shaft to support the distributor 2 rotationally about its own longitudinal axis A4 and for the supply to it of the fluid to be filtered, made rotational by the motor reducer unit 75; 76, a number of radial slots to enable the passage of the fluid from chamber 77, which is supplied through inlet tubing 78, to the axial hole 79 of the hollow shaft 74; 80 (Figure 12), a nozzle with snout protruding from the front plate of the distributor 2; 81 (Figure 13), a short-section nozzle fashioned within the width of the front plate 4; 82 (Figure 10), a formation of nozzles, distributed at equal angular intervals, on a single ideal circumference C1.

The nozzles 80, 81, 82 can be made in such a way as to impart a helical component to the jet with respect to its longitudinal axis, to increase the self-cleaning effect: this can be achieved, for example, by adopting deflector baffles, not shown, distributed within the outlet opening, or even inside it.

The figures also show: 83 (Figure 11) a formation of nozzles distributed on circumferences C1, C2, C3 having decreasing radiuses; V (Figure 9), the direction of the velocity of the flow as it meets the filter element 10, defining an angle B with a plane parallel to the lie of the mesh of between 90 DEG and approximately 30 DEG : this angle being constant or variable for the nozzles of any one distributor and also variable successive positions of the same nozzle in one revolution of the distributor or of the gauze around its respective axis; 84 (Figure 14), a distributor, in relation to a filter as in the fourth variation of the first version, having a cylindrical external surface delimited at its front end by a plate 85 inclined with respect to the filter element 10 in order to vary the distance from it to the nozzles 8 located in the plate; 86 (figure 15), a filter as in the fifth variation of the first version having sleeve 86a to support and permit axial displacement within the inlet tube 6 of the distributor 84 to enable actuation with alternate motion by means of a device with cam 88 driven by a motor reducer unit 89; A3 (Figure 16), the axis of shaft 17 forming an angle B1 with the axis of the distributor 2 advantageously of between a few degrees up to approximately 30 DEG, as in the sixth variation of the first version.

The amplitude of angle B1, as with the amplitude of angle B between the axis of the jets and the plane of the filter element enable also particles to be intercepted that have diameters smaller than the size of the holes through the gauze.

The figures also show: 90 (Figure 18), a filter according to the invention as in the said third version, having a tubular oscillating distributor 91 supported in the casing 62 by means of a transverse shaft 93 which has extremities hinged to the casing itself; 94, the flexible supply tube of distributor 91, which is made to oscillate by means of a suitable actuator, not shown, for example pneumatic, cam, hydraulic or other equivalent, so that a jet of fluid is projected against filter element 95, being disc shaped, or even defined by a portion of cylindrical or spherical surface 95a, held by a pair of rings 96 of the casing 92 downstream of the filter element 95, 95a; 98, a discharge tube for the filtered residue, upstream of the filter element 95; 99 (Figure 20), a filter as in the said further version, having drum or basket filter element 100, being cylindrical in shape, made to rotate on its own longitudinal axis, for example, by means of shaft 101 and corresponding motor reducing unit 102 fixed to the casing 103: the shaft 101 being coupled to the filter element by means of flange 104; 105, a supply tube for the oil to the crossed distributor 106, having two pairs of opposing nozzles 107 set at 90 DEG to each other; 108, a seal ring positioned on the bottom of the filter element 100 consisting a pair of lips 109 diverging downwards and making a sliding contact on the opposite sides of annular wall 110 separating an inner chamber 111, delimited by the filter element 100, for the liquid to be filtered and the filter residue, from an external coaxial chamber 112, at the base of which the filtered fluid is discharged through corresponding tube 113; 114, the discharge tube for the residue.

It is to be noted that the tube 105 and the filter element 100 can have relative axial motion, even discontinuous, to make full use of the length of the filter element 100.

The figures also show: 115 (Figure 22) a distributor with nozzles 116 that are positioned in planes that contain the axis of the filter element 100 as with nozzles 107, but pointing downwards and outwards; 117, a distributor having three nozzles 118, arranged radially at equal angles to one another and, for at least part of their lengths in planes that do not contain the axis of the filter element 100, so as to impart to the fluid a component of velocity that is tangential to it; 119 (Figure 24) a filter as in the first variation of the said last version, having a rotating conical flow deflector 120 with apex pointing towards the fluid inlet tube 121, and having an axis that coincides with axis of rotation of the relative support shaft 122: the shaft being connected to the said deflector 120 at its apex and being inserted coaxially inside fluid inlet tube 121 and driven by corresponding motor reducer unit 123; 124, a disc filter element analogous to the filter element 95 already described and similarly fixed to the casing 125 of the filter 119; 126, 127 the respective discharge tubes of the filtered liquid and filter residue; 128 (Figure 25), a support shaft for the deflector element 120 joining at its base, in a filter as in the second variation of the last version; 130, a corresponding motor reducer unit fixed to the casing 131; 132, a through hole positioned in the central part of the annular filter element 133, also with concave or convex surface, for the passage through it of the shaft 128; 134, an annular support for the central part of the filter element 133 connected by means of rods 134a to the base of the casing 131; 135, a fluid inlet tube that directs it against the deflector 120, the axis of the said tube being advantageously aligned with the axis of the shaft 128.

It is to be noted that the rotating conical flow deflector 120 develops a conical laminar jet that diverges towards the filter element.

With reference to the filter as in the configuration illustrated in Figure 1, in the version with single nozzle with an outlet diameter of 20 mm the operational parameters measured are indicated in Tables A, B.

The following symbols indicate:
H, QT, respectively, the inlet pressure and flow rate of the fluid;
Rs, the ratio between filtered residue and QT;
QF, the flow rate of the filtered fluid;
E, the filtering efficiency as defined by the ratio QF/QT, the tests having been carried out with a gauze filter element with openings of 110 micrometers, after 100 hours of operation with varying values of flow, pressure and degree of contamination of the fluid.

The contaminating particles having been of a size of less than or equal to 2 mm and consisting of dusty nodular cast iron cuttings.

The fluid used having been a oil-water emulsion commonly employed in swarf machining.

Table A relating to operation with essentially uncontaminated fluid to indicate the maximum filtering efficiency (E) obtainable with a given configuration of filter.

**Table A**

| H (Pa) | QT (l/min) | QF (l/min) | E (%) |
|---|---|---|---|
| 35000 | 113 | 95 | 84 |
| 50000 | 152 | 131 | 86 |
| 65000 | 172 | 149 | 86.6 |
| 80000 | 202 | 172 | 85 |

Table B relating to operation with contamination particle as defined above, introduced into the fluid in a time interval of between approximately 10 and 17 seconds, to simulate a phase of maximum production of particles by the machine tool.

**Table B**

| H (Pa) | RS (g/l) | QT (l/min) | QT (l/min) | E (%) |
|---|---|---|---|---|
| 35000 | 9.5 | 106 | 68 | 64 |
| 50000 | 8.9 | 149 | 107 | 72 |
| 65000 | 15.3 | 151 | 98 | 65 |
| 80000 | 4.3 | 113 | 85 | 75 |

The rotational frequency of the filter element having been close to 1/60 Hz.

Operation is as follows: the filtered residue that has dimensions greater than openings in the gauged mesh of the gauze are blocked by it and deflected backwards even if in a direction which is inclined with respect to the gauze by just a few degrees: this is principally due to the dynamic effect of the fluid on each particle of the said residue, and generates a continuous cleaning action of the filter element.

The annular peripheral portion of each jet contributes more to the cleaning action than the central portion, as it is free to deflect its trajectory in a radial direction as it makes contact with the gauze. It is to be noted that the jets, advantageously tubular cylindrical in form, can have a cross-section of whichever form, for example, in the form of a polygon, regular or not, or confined in a corona as defined by any two concentric geometric figures, such as circular corona or other such convenient form.

It is to be understood that a very efficient self cleaning effect is achieved if the active surface 11 of the filter element 10, 10a, 10b is dipped in the liquid in the lower part of the rotation around the axis A2: this can be achieved by choosing an appropriate diameter for the discharge conduit 24.

Furthermore, referring to all the embodiments according to the invention, the filter element 10, 95a, 100, 124, 133, can also be completely immersed into the liquid.

This has a further advantage consisting in an improved cleaning, and simultaneously reducing wear of, the filter element: the latter technical effect is obtained because the fluid dissipates a certain amount of its energy through the liquid occupying the filtering chamber.

In order to further increase the cleaning effect, for example in the embodiments according to Fig. 1, or Fig. 24, or Fig. 16, a jet of filtered liquid may be provided directed against the filter element 10 on the side of it opposite to the jet 9, for example as indicated by the arrow 73a.

According to such a configuration, angle B1 (Fig. 6) may also be up to 90°, in order to make optimal use of the vortexes defined by the jet 9 into the filtering chamber occupied by the liquid: in this way, the axis of the jets 9 are parallel to the filter element 10.

Furthermore, for the same reason, the filter element may be associated to an ultrasound cleaning device, per se known in the art, for example positioned as indicated by the arrow 73a.

In practice, the materials, dimensions and details of execution may be different from but technically equivalent to those described without departing from the scope of the present invention, as defined by the claims.

## Claims

1. Filter for liquids with solid particles in suspension, comprising a filter element (10, 10a, 10b, 100) having gauged openings to allow the passage of liquid and to block the particles to be filtered, a distributor element (2, 49, 84, 91, 106, 121) to which the liquid to be filtered is supplied, said distributor element (2, 49, 84, 91, 106, 121) and said filter element (10, 10a, 10b, 100) having a relative velocity with a component parallel to a plane tangent to said filter element (10, 10a, 10b, 100), characterized in that said distributor element (2, 49, 84, 91, 106, 121) is constructed in such a way that the liquid supplied to the distributor element is directed under pressure in form of at least one jet against said filter element (10, 10a, 10b, 100).

2. Filter, according to claim 1, wherein said distributor element (2, 49, 84) generates said at least one jet (9) by means of at least one nozzle (8).

3. Filter, according to claim 2, wherein the said filter element (10, 10a, 10b), essentially flat, is connected by means of a support (12) to a shaft (17, 42, 46) made to rotate on its own longitudinal axis (A2).

4. Filter, according to claim 1, or 2 or 3, wherein the said distributor element (2) is supported by a shaft (74) made to rotate on its longitudinal axis (A4).

5. Filter, as claimed in one or more of claims 3 to 4, wherein said distributor element (2) is provided with an inlet tube (6) of the fluid to be filtered having a longitudinal axis (A1) parallel to the longitudinal axis (A2) of the shaft (17).

6. Filter, as claimed in one or more of claims 3 to 5, wherein the longitudinal axis (A2) of the shaft (17) is inclined with respect to the axis (A1) of the inlet conduit (6) with an angle (B1) of less than 30°.

7. Filter, according to claim 3, wherein said support (12) comprises a pair of central, opposing flanges (13, 73), between which the innermost part of the filter element (10) is held and a pair of peripheral, opposing rings (14, 70) between which the outermost part of the filter element is held; the active surface of said filter element being essentially in the form of a circular annular band (11) as defined by the internal diameter of said pair of peripheral rings (14, 70) and the external diameter of said pair of flanges (13, 73).

8. Filter, according to claim 7, wherein said pair of flanges (13) is connected to the extremity of a hub (15) having an axial hole for the coupling in it of the extremity of a shaft (17) driven by a motor reducer unit (18); a number of radial arms (20) extending from the rearmost end of the axial length of said hub (15, 53) that support a tubular sleeve (21) fixed to said pair of peripheral rings (14).

9. Filter, according to claim 8, wherein the axial length of said tubular sleeve (21) is sufficient to avoid interference between said at least one jet (9) exiting from said at least one nozzle (8) and said radial arms (20).

10. Filter, according to claim 8, wherein the outermost ring of said pair of rings (14) is fixed around its periphery to a tubular spacer element (59) for the peripheral support of further filter element (10) by means of a pair of peripheral external rings (60); said further filter element being held in its centre by a pair of flanges (62) connected to said hub (53) by means of cylindrical spacer element (61) aligned with it.

11. Filter, according to claim 8, wherein said hub (53) has an axial through hole to couple it to an intermediate portion of a shaft (65), made to rotate by means of a motor reducer unit; the extremity of said shaft supporting a hub (15) of a further filter element.

12. Filter, according to claim 2 and 4, wherein said filter element (10, 10a, 10b), essentially flat, is held by a support (12) comprising a pair of central, opposing flanges (73), between which the innermost part of the filter element (10) is held and a pair of peripheral, opposing rings (70) between which the outermost part of the filter element is held: the active surface of said filter element being essentially in the form of a circular annular band (11) as defined by the internal diameter of said pair of peripheral rings (70) and the external diameter of said pair of flanges (73): said central flanges (73) being supported by means of an axial rod (72).

13. Filter, according to claim one or more of the preceding claims, wherein said distributor (2, 49) consists of a cylindrical casing (3), having an axis (A2) parallel to the axis (A1) of the supply tube (6) and located a distance (D) from it in the range of a few millimeters up to a few centimeters.

14. Filter, according to claim 13, wherein the front end plate of said distributor has nozzles (8, 80, 81) positioned off-centre, having axes inclined with respect to the plane containing the filter element, or to a plane tangential to it, with an angle (B) of between 90 DEG and 30 DEG .

15. Filter, according to claim 14, wherein said distributor (3) has a front plate (84) inclined with respect to the plane containing the filter element (10).

16. Filter, according to claim 14, wherein said nozzles (8, 80) consist of tubular elements connected to the front plate (4) of the distributor element (2).

17. Filter, according to claim 14, wherein said nozzles consist of apertures (81) through the front plate (4) of the distributor element (2).

18. Filter, according to claim 10, wherein said distributor (49) has an axial tubular element supporting with clearance a shaft (46) that rotates a pair of filter elements (10).

19. Filter, according to claim 13, wherein said inlet tube (6) which is rigidly connected to the distributor (2, 84) has an axial alternating sliding coupling with the casing (19) of the filter element (10).

20. Filter, according to claim 1, wherein the distributor (91) is tubular in form and is made to oscillate on a transverse axis.

21. Filter, according to claim 3 or 4, wherein the filter element (100) is drum shaped and made to rotate on its longitudinal axis.

22. Filter, according to claim 21, wherein the distributor (106), is provided at the inside of said filter element (100) drum.

23. Filter, according to claim 21, wherein on the lower rim of said filter element there is a seal ring (108) consisting of a pair of lips (109) in contact with an annular panel (110) extending from the base of casing.

24. Filter, according to claim 2, wherein said distributor (121) has a flow deflector (120), advantageously conical, with apex facing outlet of the supply tube of the fluid.

25. Filter, according to claim 24, wherein said flow deflector (120) has an axis incident with that of its rotating support shaft (122, 128).

26. Filter, according to claim 25, wherein said support shaft (122) is connected to said deflector (120) at the apex of said deflector.

27. Filter, according to claim 25, wherein said support shaft (128) is connected to said deflector (120) at the base of said deflector.

28. Filter, as claimed in one or more of the preceding claims, wherein said nozzles have devices to impart to the fluid a helical motion.

29. Filter, as claimed in one or more of the preceding claims, wherein, on opposite side to that facing the at least one jet, the filter element is fixed to a support structure in the form of a lamina with ample apertures to allow the passage of the filtered fluid.

## Patentansprüche

1. Filter für Flüssigkeiten mit Feststoffpartikeln in Suspension, mit einem Filterelement (10, 10a, 10b, 100), das kalibrierte Öffnungen aufweist, um den Durchgang von Flüssigkeit zuzulassen und die zu filternden Partikel abzublocken, einem Verteilerelement (2, 49, 84, 91, 106, 121), dem die zu filternde Flüssigkeit zugeführt wird, wobei das Verteilerelement (2, 49, 84, 91, 106, 121) und das Filterelement (10, 10a, 10b, 100) eine Relativgeschwindigkeit zueinander haben, mit einer Komponente, die parallel verläuft zu einer Ebene, die das Filterelement (10, 10a, 10b, 100) tangiert, dadurch gekennzeichnet, daß das Verteilerelement (2, 49, 84, 91, 106, 121) derart konstruiert ist, daß die dem Verteilerelement zugeführte Flüssigkeit unter Druck in Form von wenigstens einem Strahl gegen das Filterelement (10, 10a, 10b, 100) gerichtet ist.

2. Filter nach Anspruch 1, wobei das Verteilerelement (2, 49, 84) den wenigstens einen Strahl (9) mittels wenigstens einer Düse (8) erzeugt.

3. Filter nach Anspruch 2, wobei das Filterelement (10, 10a, 10b), das im wesentlichen flach ausgebildet ist, mittels eines Trägers (12) mit einer Welle (17, 42, 46) verbunden ist, die dazu ausgebildet ist, sich um ihre eigene Längsachse (A2) zu drehen.

4. Filter nach Anspruch 1 oder 2 oder 3, wobei das Verteilerelement (2) mittels einer Welle (74) gelagert ist, die dazu ausgebildet ist, sich um ihre eigene Längsachse (A4) zu drehen.

5. Filter nach einem oder mehreren der Ansprüche 3 bis 4, wobei das Verteilerelement (2) mit einem Einlaßrohr (6) für das zu filternde Fluid versehen ist, wobei das Einlaßrohr (6) eine Längsachse (A1) aufweist, die parallel verläuft zu der Längsachse (A2) der Welle (17).

6. Filter nach einem oder mehreren der Ansprüche 3 bis 5, wobei die Längsachse (A2) der Welle (17) in bezug auf die Achse (A1) des Einlaßkanals (6) mit einem Winkel (B1) von weniger als 30° geneigt ist.

7. Filter nach Anspruch 3, wobei der Träger (12) ein Paar von zentralen, sich gegenüberliegenden Flanschen (13, 73) aufweist, zwischen denen der innerste Teil des Filterelementes (10) gehalten ist, und ein Paar von äußeren, sich gegenüberliegenden Ringen (14, 70) aufweist, zwischen denen der äußerste Teil des Filterelementes gehalten ist; wobei die aktive Fläche des Filterelementes im wesentlichen in der Form eines kreisringförmigen Bandes (11) ausgestaltet ist, wie es definiert ist durch den Innendurchmesser des Paars von äußeren Ringen (14, 70) und den Außendurchmesser des Paars von Flanschen (13, 73).

8. Filter nach Anspruch 7, wobei das Paar von Flanschen (13) mit dem Ende einer Nabe (15) verbunden ist, die ein Axialloch aufweist, um darin das Ende einer Welle (17) anzuschließen, die angetrieben ist von einer Motor/Untersetzungseinheit (18), wobei eine Anzahl von radialen Armen (20) vorgesehen ist, die sich von dem hintersten Ende der axialen Länge der Nabe (15, 53) erstrecken und eine rohrförmige Hülse (21) lagern, die an dem Paar von äußeren Ringen (14) festgelegt ist.

9. Filter nach Anspruch 8, wobei die axiale Länge der rohrförmigen Hülse (21) hinreichend ist, um ein Überschneiden zwischen dem wenigstens einen Strahl (9), der aus der wenigstens einen Düse (8) austritt, und den radialen Armen (20) zu vermeiden.

10. Filter nach Anspruch 8, wobei der äußerste Ring des Paars von Ringen (14) um seinen Umfang herum an einem rohrförmigen Abstandselement (59) festgelegt ist, und zwar für die umfängliche Abstützung eines weiteren Filterelementes (10) mittels eines Paars von umfänglichen Außenringen (60); wobei das weitere Filterelement in seiner Mitte von einem Paar von Flanschen (62) gehalten ist, die mit der Nabe (53) mittels eines zylindrischen Abstandselementes (61) verbunden sind, das damit ausgerichtet ist.

11. Filter nach Anspruch 8, wobei die Habe (53) ein axiales Durchgangsloch aufweist, um sie mit einem mittleren Abschnitt einer Welle (65) zu koppeln, die dazu ausgelegt ist, mittels einer Motor/Untersetzungseinheit gedreht zu werden; wobei das Ende der Welle eine Nabe (15) eines weiteren Filterelementes lagert.

12. Filter nach Anspruch 2 und 4, wobei das Filterelement (10, 10a, 10b), das im wesentlichen flach ausgebildet ist, von einem Träger (12) gehalten ist, der ein Paar von zentralen, sich gegenüberliegenden Flanschen (73) aufweist, zwischen denen der innerste Teil des Filterelementes (10) gehalten ist, und ein Paar von äußeren, sich gegenüberliegenden Ringen (70) aufweist, zwischen denen der äußerste Teil des Filterelementes gehalten ist: wobei die aktive Fläche des Filterelementes im wesentlichen in der Form eines kreisringförmigen Bandes (11) ausgestaltet ist, wie es definiert ist durch den Innendurchmesser des Paars von äußeren Ringen (70) und den Außendurchmesser des Paars von Flanschen (73): wobei die zentralen Flansche (73) mittels eines axialen Stabes (72) gelagert sind.

13. Filter nach einem oder mehreren der vorhergehenden Ansprüche, wobei der Verteiler (2, 49) ein zylindrisches Gehäuse (3) umfaßt, mit einer Achse (A2), die parallel ausgerichtet ist zu der Achse (A1) des Zuführrohrs (6) und die von dieser um einen Abstand (D) beabstandet angeordnet ist, der im Bereich von wenigen Millimetern bis hin zu wenigen Zentimetern liegt.

14. Filter nach Anspruch 13, wobei die vordere Endplatte des Verteilers Düsen (8, 80, 81) aufweist, die gegenüber der Mitte versetzt angeordnet sind, mit jeweiligen Achsen, die mit einem Winkel (B) zwischen 90 Grad und 30 Grad in bezug auf die Ebene geneigt sind, die das Filterelement enthält, oder in bezug auf eine Ebene, die tangential hierzu ausgerichtet ist.

15. Filter nach Anspruch 14, wobei der Verteiler (3) eine vordere Platte (84) aufweist, die in bezug auf die Ebene geneigt ist, die das Filterelement (10) enthält.

16. Filter nach Anspruch 14, wobei die Düsen (8, 80) aus rohrförmigen Elementen bestehen, die mit der vorderen Platte (4) des Verteilerelementes (2) verbunden sind.

17. Filter nach Anspruch 14, wobei die Düsen aus Aperturen (81) durch die vordere Platte (4) des Verteilerelementes (2) bestehen.

18. Filter nach Anspruch 10, wobei der Verteiler (49) ein axiales rohrförmiges Element aufweist, das mit Spiel eine Welle (46) lagert, die ein Paar von Filterelementen (10) dreht.

19. Filter nach Anspruch 13, wobei das Einlaßrohr (6), das starr an dem Verteiler (2, 84) angeschlossen ist, eine axiale Wechselschiebekupplung mit dem Gehäuse (19) des Filterelementes (10) besitzt.

20. Filter nach Anspruch 1, wobei der Verteiler (91) rohrförmig ausgebildet ist und dazu ausgelegt ist, um eine Querachse zu oszillieren.

21. Filter nach Anspruch 3 oder 4, wobei das Filterelement (100) trommelförmig ausgebildet ist und dazu ausgelegt ist, um seine Längsachse zu rotieren.

22. Filter nach Anspruch 21, wobei der Verteiler (106) im Inneren der Trommel des Filterelementes (100) vorgesehen ist.

23. Filter nach Anspruch 21, wobei an dem unteren Rand des Filterelementes ein Dichtring (108) vorgesehen ist, der aus einem Paar von Lippen (109) besteht, die eine ringförmige Platte (110) berühren, die sich von der Basis des Gehäuses aus erstreckt.

24. Filter nach Anspruch 2, wobei der Verteiler (121) einen Strömungsdeflektor (120) aufweist, der vorteilhafterweise konisch ausgebildet ist, mit einer Spitze, die zum Auslaß des Zuführrohrs für das Fluid hinweist.

25. Filter nach Anspruch 24, wobei der Strömungsdeflektor (120) eine Achse aufweist, die mit der Achse seiner rotierenden Trägerwelle (122, 128) zusammenfällt.

26. Filter nach Anspruch 25, wobei die Trägerwelle (122) mit dem Deflektor (120) an der Spitze des Deflektors verbunden ist.

27. Filter nach Anspruch 25, wobei die Trägerwelle (128) mit dem Deflektor (120) an der Basis des Deflektors verbunden ist.

28. Filter nach einem oder mehreren der vorhergehenden Ansprüche, wobei die Düsen Einrichtungen aufweisen, um dem Fluid eine Schraubenbewegung zu erteilen.

29. Filter nach einem oder mehreren der vorhergehenden Ansprüche, wobei das Filterelement auf einer Seite, die der Seite gegenüberliegt, die zu dem wenigstens einen Strahl hin weist, an einer Trägerstruktur in der Form eines Plättchens mit reichlich bzw. großen Öffnungen festgelegt ist, um das gefilterte Fluid durchzulassen.

## Revendications

1. Filtre pour liquides contenant des particules solides en suspension, comprenant un élément filtrant (10, 10a, 10b, 100) ayant des ouvertures calibrées pour permettre le passage du liquide et pour bloquer les particules à filtrer, un élément distributeur (2, 49, 84, 91, 106, 121) auquel est fourni le liquide à filtrer, ledit élément distributeur (2, 49, 84, 91, 106, 121) et ledit élément filtrant (10, 10a, 10b, 100) ayant une vitesse relative avec un composant parallèle à un plan tangent audit élément filtrant (10, 10a, 10b, 100), ***caractérisé en ce que*** ledit élément distributeur (2, 49, 84, 91, 106, 121) est construit d'une telle façon que le liquide fourni audit élément distributeur est dirigé sous pression, sous forme d'au moins un jet, contre ledit élément filtrant (10, 10a, 10b, 100).

2. Filtre selon la Revendication 1, dans lequel ledit élément distributeur (2, 49, 84) génère ledit au moins un jet (9) au moyen d'au moins un gicleur (8).

3. Filtre selon la Revendication 2, dans lequel ledit élément filtrant (10, 10a, 10b), essentiellement plat, est relié au moyen d'un support (12) à un arbre (17, 42, 46) prévu pour tourner sur son propre axe longitudinal (A2).

4. Filtre selon la Revendication 1, 2 ou 3, dans lequel ledit élément distributeur (2) est supporté par un arbre (74) prévu pour tourner sur son axe longitudinal (A4).

5. Filtre selon l'une ou plusieurs des Revendications 3 à 4, dans lequel ledit élément distributeur (2) est muni d'un tube d'entrée (6) du fluide à filtrer, tube ayant un axe longitudinal (A1) parallèle à l'axe longitudinal (A2) de l'arbre (17).

6. Filtre selon l'une ou plusieurs des Revendications 3 à 5, dans lequel l'axe longitudinal (A2) de l'arbre (17) est incliné par rapport à l'axe (A1) du conduit d'entrée (6) selon un angle (B1) inférieur à 30°.

7. Filtre selon la Revendication 3, dans lequel ledit support (12) comprend une paire de brides centrales opposées (13, 73), entre lesquelles est maintenue la partie la plus à l'intérieur de l'élément filtrant (10), et une paire de couronnes périphériques opposées (14, 70) entre lesquelles est maintenue la partie extérieure de l'élément filtrant, la surface active dudit élément filtrant étant essentiellement sous la forme d'une bande circulaire annulaire (11) telle que définie par le diamètre interne de ladite paire de couronnes périphériques (14, 70) et le diamètre externe de ladite paire de brides (13, 73).

8. Filtre selon la Revendication 7, dans lequel ladite paire de brides (13) est reliée à l'extrémité d'un moyeu (15) ayant un trou axial pour l'accouplement dans celui-ci de l'extrémité d'un arbre (17) entraîné par un ensemble réducteur du moteur (18), plusieurs bras radiaux (20) partant de l'extrémité arrière de la longueur axiale dudit moyeu (15, 53) qui supporte un manchon tubulaire (21) fixé à ladite paire de couronnes périphériques (14).

9. Filtre selon la Revendication 8, dans lequel la longueur axiale dudit manchon tubulaire (21) est suffisante pour éviter une interférence entre ledit au moins un jet (9) sortant dudit au moins un gicleur (8) et lesdits bras radiaux (20).

10. Filtre selon la Revendication 8, dans lequel la couronne la plus à l'extérieur de ladite paire de couronnes (14) est fixée autour de sa périphérie à un élément espaceur tubulaire (59) pour le support périphérique d'un élément filtrant supplémentaire (10) au moyen d'une paire de couronnes externes périphériques (60), ledit élément filtrant supplémentaire étant maintenu en son centre par une paire de brides (62) reliées audit moyeu (53) au moyen d'un élément espaceur cylindrique (61) aligné avec lui.

11. Filtre selon la Revendication 8, dans lequel ledit moyeu (53) présente un trou traversant axial pour le coupler à une portion intermédiaire d'un arbre (65) prévu pour tourner en rotation au moyen d'un ensemble réducteur de moteur, l'extrémité dudit arbre supportant un moyeu (15) d'un élément filtrant supplémentaire.

12. Filtre selon les Revendications 2 et 4, dans lequel ledit élément filtrant (10, 10a, 10b), essentiellement plat, est maintenu par un support (12) comprenant une paire de brides centrales opposées (73) entre lesquelles est maintenue la partie la plus intérieure de l'élément filtrant (10) et une paire de couronnes périphériques opposées (70) entre lesquelles est maintenue la partie extérieure de l'élément filtrant, la surface active dudit élément filtrant étant essentiellement sous la forme d'une bande circulaire annulaire (11) telle que définie par le diamètre interne de ladite paire de couronnes périphériques (70) et le diamètre externe de ladite paire de brides (73), lesdites brides centrales (73) étant soutenues au moyen d'une tige axiale (72).

13. Filtre selon l'une ou plusieurs des Revendications précédentes, dans lequel ledit distributeur (2, 49) se compose d'un boîtier cylindrique (3) ayant un axe (A2) parallèle à l'axe (A1) du tube d'alimentation (6) et éloigné de lui d'une distance (D) allant de quelques millimètres à quelques centimètres.

14. Filtre selon la Revendication 13, dans lequel la plaque d'extrémité avant dudit distributeur possède des gicleurs (8, 80, 81) placés de façon excentrée, ayant des axes inclinés par rapport au plan contenant l'élément filtrant, ou à un plan tangentiel à celui-ci, selon un angle (B) d'entre 90° et 30°.

15. Filtre selon la Revendication 14, dans lequel ledit distributeur (2) possède une plaque avant (84) inclinée par rapport au plan contenant l'élément filtrant (10).

16. Filtre selon la Revendication 14, dans lequel lesdits gicleurs (8, 80) sont constitués par des éléments tubulaires reliés à la plaque avant (4) de l'élément distributeur (2).

17. Filtre selon la Revendication 14, dans lequel lesdits gicleurs sont constitués par des ouvertures (81) percées dans la plaque avant (4) de l'élément distributeur (2).

18. Filtre selon la Revendication 10, dans lequel ledit distributeur (49) possède un élément axial tubulaire supportant avec jeu un arbre (46) qui entraîne en rotation une paire d'éléments filtrants (10).

19. Filtre selon la Revendication 13, dans lequel ledit tube d'entrée (6), qui est relié de manière rigide au distributeur (2, 84), a un accouplement coulissant axial à mouvement alternatif avec le boîtier (19) de l'élément filtrant (10).

20. Filtre selon la Revendication 1, dans lequel le distributeur (91) est de forme tubulaire et est construit pour osciller sur un axe transversal.

21. Filtre selon la Revendication 3 ou 4, dans lequel l'élément filtrant (100) a la forme d'un tambour et est construit pour tourner sur son axe longitudinal.

22. Filtre selon la Revendication 21, dans lequel le distributeur (106) est placé à l'intérieur dudit tambour de l'élément filtrant (100).

23. Filtre selon la Revendication 21, dans lequel sur le rebord inférieur dudit élément filtrant se trouve une bague d'étanchéité (108) constituée d'une paire de lèvres (109) en contact avec un panneau annulaire (110) partant de la base du boîtier.

24. Filtre selon la Revendication 2, dans lequel ledit distributeur (121) possède un déflecteur (120) d'écoulement, avantageusement conique, avec le sommet en regard de la sortie du tube d'alimentation du fluide.

25. Filtre selon la Revendication 24, dans lequel ledit déflecteur (120) d'écoulement possède un axe incident avec celui de son arbre de support rotatif (122, 128).

26. Filtre selon la Revendication 25, dans lequel ledit arbre de support (122) est raccordé audit déflecteur (120) au sommet dudit déflecteur.

27. Filtre selon la Revendication 25, dans lequel ledit arbre de support (128) est raccordé audit déflecteur (120) à la base dudit déflecteur.

28. Filtre selon l'une ou plusieurs des Revendications précédentes, dans lequel lesdits gicleurs possèdent des dispositifs pour communiquer au fluide un mouvement hélicoïdal.

29. Filtre selon l'une ou plusieurs des Revendications précédentes, dans lequel, sur le côté opposé à celui faisant face à l'au moins un jet, l'élément filtrant est fixé à une structure de support sous la forme d'une lame avec d'amples ouvertures pour permettre le passage du fluide filtré.
